# EUROPÄISCHE PATENTANMELDUNG

(11) **EP 4 778 864 A1**
(43) Veröffentlichungstag der Anmeldung: **22.07.2026**
(21) Anmeldenummer: 26152377.3
(22) Anmeldetag: 16.01.2026
(51) Int. Cl.: B65G 53/46

(54) **VERFAHREN ZUM EINDOSIEREN VON TROCKENEN FUTTERSTOFFEN IN EINE PNEUMATISCHE FÖRDERLEITUNG UND FÜTTERUNGSANLAGE DAFÜR**

(30) Priorität: 17.01.2025 DE 102025101723
(71) Anmelder: TEWE Elektronic GmbH, 48691 Vreden (DE)
(72) Erfinder: Brinkmann, Hendrik, 46354 Südlohn (DE)
(74) Vertreter: Tarvenkorn, Oliver

(57) **Zusammenfassung**

Verfahren zum Eindosieren von trockenen Futterstoffen in eine pneumatische Förderleitung, mit wenigstens folgenden Schritten
a) Erzeugen eines Luftstroms *V̇* in der Förderleitung mit einem Arbeitsdruck p mittels einer Drucklufterzeugungseinrichtung (10);
b) Eindosieren von rieselfähigen Futterstoffen an einer Dosierstation (20), die eine Zellenradschleuse (21) umfasst, wobei sich ein Primärabschnitt (11) der Förderleitung zwischen der Drucklufterzeugungseinrichtung (10) und der Zellenradschleuse (21) erstreckt und wobei die Futterstoffe über die Zellenradschleuse (21) in den Luftstrom V in der Förderleitung abgegeben werden;
c) Austragen des Futter-Luft-Gemisches über einen sich jenseits der Dosierstation (20) erstreckenden Sekundärabschnitt (12) der Förderleitung zu wenigstens einer Ausgabestelle;
dadurch gekennzeichnet,
- dass eine Zellenradschleuse (21) verwendet wird, die einen Rotor (22) mit Flügeln (24) besitzt, wobei zumindest die Flügel (24) aus einem Polyurethan oder aus einem thermoplastischen Kunststoff bestehen und wobei der Durchmesser des Rotors (22) gegenüber einem Innendurchmesser einer umgebenden Gehäusewandung (26) ein Übermaß besitzt; und
- dass die Kompression und der Volumenstrom der Förderluft in der Drucklufterzeugungseinrichtung (10) so eingestellt werden, dass die Temperatur der Förderluft auf ein solches Maß erhöht wird, dass durch die in die Zellenradschleuse (21) eintretende Förderluft den Rotor (22) derart erwärmt, dass die Flügel (24) des Rotors (22) derart erweicht werden, dass sie in einem Maße elastisch sind, dass sie entgegen der Rotationsrichtung nach hinten gebogen werden und einen schleifenden, eine Luftdichtheit herbeiführenden Kontakt zur Innenwandung des Gehäuses (26) halten.

## Beschreibung

Die Erfindung betrifft ein Verfahren zum Eindosieren von trockenen Futterstoffen in eine pneumatische Förderleitung mit den Merkmalen des Oberbegriffs des Anspruchs 1.

In pneumatischen Fütterungsanlagen wird eine Förderleitung mit einem Luftstrom beaufschlagt, der von einer Drucklufterzeugungseinrichtung erzeugt wird, insbesondere von einem Seitenkanalverdichter. Rieselfähige Futterstoffe werden an einer Dosierstation über wenigstens eine Zellenradschleuse in die Förderleitung eindosiert, vom Luftstrom mitgerissen und zu weiter entfernten Ausschleusungspositionen gefördert, die im weiteren Verlauf der Förderleitung in einem Stallgebäude angeordnet sind. Die Förderleitung unterteilt sich in einen Primärabschnitt zwischen der Drucklufterzeugungseinrichtung und der Dosierstation und einen Sekundärabschnitt, der an der Dosierstation beginnt und an der am weitesten davon entfernten Ausgabestelle endet. Da zumindest in dem Primärabschnitt ein deutlich gegenüber dem Umgebungsdruck erhöhter Arbeitsdruck herrscht, besteht das Problem, dass Teile des Förderluftstroms durch die nicht luftdichte Zellenradschleuse in den Futtervorratsbehälter einströmen und dort zu einer beträchtlichen Staubentwicklung führen.

Die Aufgabe der vorliegenden Erfindung besteht somit darin, die Staubentwicklung bei der Einmischung des Futterstoffes in den Förderluftstrom zu reduzieren oder ganz zu verhindern.

Diese Aufgabe wird durch ein Verfahren zum Eindosieren von trockenen Futterstoffen in eine pneumatische Förderleitung mit den Merkmalen des Anspruchs 1 gelöst.

Das Verfahren zum Eindosieren von trockenen Futterstoffen in eine pneumatische Förderleitung, umfasst zunächst folgende Schritte:
a) Erzeugen eines Luftstroms V in der Förderleitung mit einem Arbeitsdruck p mittels einer Drucklufterzeugungseinrichtung;
b) Eindosieren von rieselfähigen Futterstoffen an einer Dosierstation, die eine Zellenradschleuse umfasst, wobei sich ein Primärabschnitt der Förderleitung zwischen der Drucklufterzeugungseinrichtung und der Zellenradschleuse erstreckt und wobei die Futterstoffe über die Zellenradschleuse in den Luftstrom V in der Förderleitung abgegeben werden; und
c) Austragen des Futter-Luft-Gemisches über einen sich jenseits der Dosierstation erstreckenden Sekundärabschnitt der Förderleitung zu wenigstens einer Ausgabestelle.

Die Lösung beruht darauf, dass in der Zellenradschleuse der Dosierstation ein Rotor mit Flügeln verwendet wird, der als Ganzes aus einem Polyurethan oder aus einem thermoplastischen Kunststoff wie Polypropylen oder Polyethylen besteht, oder bei dem zumindest die Flügel daraus bestehen. Der für den Rotor verwendete Kunststoff besitzt insbesondere keine Faserfüllung. Der Rotor hat im Durchmesser ein Übermaß gegenüber demjenigen Abschnitt des Gehäuses der Zellenradschleuse, in dem er gelagert ist. Dadurch müssen die Flügel im Betrieb entgegen der Rotationsrichtung verbogen werden und berühren schleifend die Innenwandung des Gehäuses.

Um den durch den schleifenden Kontakt erzeugten, mechanischen Widerstand durch Reibung bei der Rotation des Rotors zu reduzieren, sieht die Erfindung zugleich vor, die beim Betrieb der Drucklufterzeugungseinrichtung stets eintretende Temperaturerhöhung durch Kompression der Förderluft gezielt auszunutzen. Dadurch wird der Kunststoff-Rotor im Betrieb so weit erweicht, dass er in einem Maße elastisch wird, dass zwar der schleifende, eine Luftdichtheit herbeiführende Kontakt zur Gehäusewand erhalten bleibt, zugleich aber aufgrund wärmebedingt reduzierter Steifigkeit die erforderliche Antriebsleistung für den Rotor reduziert wird. Durch die Erwärmung werden die Flügel des Rotors so flexibel, dass sie sich entgegen der Rotationsrichtung leicht nach hinten biegen lassen; sofern sie bereits mit einer Vorbiegung gefertigt worden sind, ermöglicht die Erwärmung in jedem Fall eine solche Erweichung, dass die Flügel im Betrieb nicht zu starr sind und damit die Reibungskräfte reduziert sind. Andererseits darf die Erweichung nicht zu stark sein, damit die Elastizität der Flügel und deren dichtende Anlage an der Gehäusewand erhalten bleibt.

Möglich ist, einen Rotor zu verwenden, der vorgekrümmte, im Querschnitt sichelförmige Flügel besitzt, wobei ein über die Kanten der Flügel gemessener Außendurchmesser dennoch ein Übermaß gegenüber dem Innendurchmesser im zugehörigen Gehäuseabschnitt hat.

Vorzugsweise wird ein Seitenkanalverdichter als Drucklufterzeugungseinrichtung eingesetzt. Die Leistung der Drucklufterzeugungseinrichtung und die sich draus ergebende Temperaturführung wird beispielsweise so gewählt, dass unmittelbar hinter dem Luftaustritt am Seitenkanalverdichter eine Temperatur von etwa 55°C gemessen wird, auf jeden Fall mehr als 50°C. In einer Entfernung von 2 Metern vom Luftaustritt wurde eine Temperatur von 45°C gemessen. Nach 6 Metern wurde eine Temperatur von 40°C bis 42°C gemessen. Aufgrund des hohen Volumenstroms der Förderluft in der Förderleitung ist die Abkühlrate in einem nicht thermisch isolierten Primärabschnitt der Förderleitung durch Wärmeverluste an die Umgebung gering, zumindest in Entfernungen von 2m bis 10m, was den üblichen Entfernungen zwischen einer Drucklufterzeugungseinrichtung und einer Futter-Dosierstation in einem Stallgebäude entspricht.

Neben der Reduzierung des Antriebsdrehmoments besteht ein Vorteil darin, wenn die erweichte thermoplastische Oberfläche so in der Temperatur eingestellt ist, dass sie sich elastisch an die Oberfläche der Gehäusewandung anpassen kann, wodurch die Dichtigkeit in besonderem Maße verbessert wird.

Um dies zu erreichen, wird insbesondere die Leistung der Drucklufterzeugungseinrichtung und der Betrag des davon abgegebenen Luftstroms V mit einer Abkühlrate ΔT des Primärabschnitts der Förderleitung so ins Verhältnis gesetzt, dass der in die Zellenradschleuse eintretende Luftstrom V eine Betriebstemperatur von 20°C bis 50°, vorzugsweise von besitzt.

Eine Fütterungsanlage zur Durchführung des Verfahrens sieht bestimmte geometrische Verhältnisse und verfahrenstechnische Vorgaben vor, mit denen die gewünschte Betriebstemperatur von 20°C bis 50° ohne sonstige Temperiermittel zu erreichen und während des Betriebs zu erhalten ist.

Eine optimale Betriebstemperatur, um die Dichtigkeit der Zellenradschleuse zu gewährleisten, wurde in einem Bereich von 30° bis 45°C ermittelt.

Der Grad der Erweichung des Rotors ist vom Werkstoff und der Geometrie abhängig. Beides wird so gewählt, dass im Ergebnis die Biegesteifigkeit der Flügel um mindestens 10% gegenüber der Biegesteifigkeit bei Raumtemperatur reduziert ist, und dass zugleich bei der genannten Betriebstemperatur von 30° bis 45°C die Kanten der unverschlissenen Flügel in Anlage mit der Innenwandung im Gehäuse bleiben. Die Biegesteifigkeit ist, wie allgemein üblich, als das Produkt aus Elastizitätsmodul und Flächenträgheitsmoment definiert.

Um den Rotor auf Betriebstemperatur zu erwärmen, kann vorgesehen werden, zunächst die Zellenradschleuse mit erwärmter Förderluft zu durchströmen, bevor diese in Rotation versetzt wird und Futter in die Förderleitung abgegeben wird.

Der Volumenstrom und die Temperatur der Förderluft am Ausgang der Drucklufterzeugungseinrichtung sollten mit dem in der Zellradschleuse geförderten Futtervolumen pro Zeit so abgestimmt werden, dass die Wärmeverluste, die durch Kontakt des geförderten Futters mit dem Rotor auftreten, durch die durch den Rotor geführte Förderluft ausgeglichen werden, damit die Betriebstemperatur in dem genannten Intervall gehalten wird.

Günstig ist dabei, wenn der Rotor eine im Verhältnis zum Durchmesser große Länge besitzt, da damit die Förderluft länger am Rotor entlang strömen und diesen erwärmen kann.

Weiterhin hat es sich als vorteilhaft erwiesen, eine Zellenradschleuse zu verwenden, bei der die Futterportionen von oben in einen tieferliegenden, Luft durchströmten Schacht fallen, welcher in Flucht mit den Abschnitten der Förderleitung liegt. Neben einer guten pneumatischen Förderwirkung durch feine Verteilung des in den Förderluftstrom abgegebenen Feststoffs wird erreicht, dass sich die Flügel nach Abgabe ihrer Futterportion frei im Schacht befinden und dort durch die durchziehende, warme Förderluft erwärmt werden können.

Vorteilhaft ist dabei bei dieser Art von Zellenradschleuse weiterhin, zwischen den Ein- und/oder Auslassöffnungen der Dosierstation ein Übergangselement vorzusehen, das sich von dem runden Strömungsquerschnitt der dort anzuschließenden Abschnitte der Förderleitung ausgehend nach oben nasenförmig erweitert. Diese nasenförmige Erweiterung ist an die - im Querschnitt gesehene - Keilform der Kammern im Rotor angepasst, so dass nicht nur der unter dem Rotor befindliche Schacht durchströmt wird, sondern auch die Kammern im Rotor selbst. Dadurch werden die Kammern freigeblasen, und durch verbesserten Luftkontakt kann eine bessere Nacherwärmung des Rotors erfolgen.

Eine zur Durchführung des Verfahrens geeignete Fütterungsanlage umfasst demnach eine Drucklufterzeugungseinrichtung, von der ein Primärabschnitt der Förderleitung bis zu einer Zellenradschleuse mit einem Rotor führt. Von der Zellenradschleuse geht ein Sekundärabschnitt der Förderleitung ab, in welchem der mit rieselfähigem, trockenem Futterstoff befrachtete Förderluftstrom zu den Futterstellen geleitet wird. In der Förderleitung in dem Sekundärabschnitt ist ein Arbeitsdruck p gegeben. Zwischen dem Auslass der Druckerzeugungseinrichtung und dem Einlass in die Zellenradschleuse, hat der Primärabschnitt der Förderleitung eine Länge x. Die Drucklufterzeugungseinrichtung gibt einen Volumenstrom V ab.

Die folgende Übersicht gibt die Parameter für die Verfahrensführung und die Ausbildung des Rotors der Zellradschleuse an:

| | Von | bis |
|---|---|---|
| Länge x (Primärabschnitt) | 2,0 m | 10 m |
| Volumenstrom V (Förderluft) | 125 m³ /h | 390 m³ /h |
| Arbeitsdruck p im Sekundärabschnitt | 0,15 bar | 0,70 bar |
| Drehzahl n des Rotors | 5,6 U/min | 42 U/min |
| Gefördertes Futtervolumen *V̇_{F}* (Feststoffschüttung) | 140gr/Sek | 700gr/Sek |
| Durchmesser Rotor | 80mm | 180mm |
| Länge Rotor | 112mm | 485mm |
| Anzahl der Kammern im Rotor | 6 | 12 |
| Volumen pro Zelle im Rotor | 0,028L | 0,40L |

Zwischen den äußeren Kanten der Flügel des thermoplastischen Zellenrades und der Innenwandung des Gehäuses der Zellradschleuse besteht stets ein schleifender Kontakt, der eine weitgehende Luftdichtigkeit zwischen den Leitungsabschnitten der Förderleitung und dem Vorratsbehälter ermöglicht. Dazu müssen der Durchmesser des Rotors, die Bogenlänge der Abschnitte der Gehäusewandung beidseits der Leitungsabschnitte wie auch die Anzahl der Kammern und Flügel so abgestimmt sein, dass in keiner Stellung des Rotors der Luftstrom von den Leitungsabschnitten nach oben hin in den Vorratsbehälter gelangen kann, sondern rechts und links vom Querschnitt der sich seitlich an die Querschnitte der Förderleitung anschließenden Bereiche der Gehäusewandung wenigstens zwei Flügel, besser wenigstens drei Flügel in Kontakt mit der Gehäusewandung sind.

Durch eine bevorzugte Sichelform der Flügel, die die Kammern des Rotors voneinander trennen, und durch eine gute Elastizität bei der vorgesehenen Betriebstemperatur T von 20°C bis 50°C, insbesondere 30°C bis 45°C, wird außerdem eine Selbstnachstellung der Kanten der Flügel erzielt, d. h. in einem gewissen Verschleißbereich können die Flügel nachfedern und den durch den länger andauernden Reibungskontakt zum Gehäuse aufgetretenen Verschleiß an den Kanten kompensieren.

Eine erfindungsgemäße Fütterungsanlage adaptiert somit für den Rotor mit seinen flexiblen Flügeln das Prinzip des Impellers, der als Kühlmittelpumpe in Bootsmotoren eingesetzt wird und der flexible Flügel besitzt, die sich schleifend an die Gehäusewandung legen. Jedoch ist die beim Impeller an einer Stelle vorgenommen Querschnittsverengung im Gehäuse für die Erfindung nicht übernommen.

Den Rotor besteht aus Polyethylen, Polypropylen oder Polyurethan und besitzt vorzugsweise mindestens 6, höchstens 12 Flügel und entsprechend ebenso viele dadurch gebildete Kammern.

Der Durchmesser des Rotors und die Größe des Bogenbereichs der Innenwandung des Gehäuses wie auch die Anzahl der Kammern und Flügel müssen so abgestimmt sein, dass in keiner Stellung des Rotors ein direkter Weg für den Luftstrom von den unteren Kammern nach oben hin zum Vorratsbehälter offen ist, sondern dass stets wenigstens zwei Flügel, besser wenigstens drei Flügel, beidseits der Förderleitung in Kontakt mit der Gehäusewandung sind.

Bei dem Rotor ist vorgesehen, dass das Verhältnis von Länge zu Durchmesser 1,0 bis 4,0 beträgt, vorzugsweise zwischen 1,4 und 3,0. Durch eine größere Länge ist der Durchströmungsweg verlängert, so dass Futter besser aus den Kammern herausgelöst werden kann und die Verteilung des aus einer Kammer des Rotors in den Förderluftstrom gleichmäßiger ist als bei einer eher punktuellen Abgabe in den Förderluftstrom. Da die Kammern des Rotors frontal angeströmt werden, während der Rotor rotiert, erfolgt die Abgabe des Futtermittels aus den Kammern im Rotor in den Förderluftstrom nicht stoßweise, sondern kontinuierlich entlang einer wandernden Berührungslinie zwischen den Flügeln des Rotors und der diese umgebenden Gehäusewandung. Damit wird eine feine Verteilung des geförderten Guts im Luftstrom erreicht und eine Pfropfenbildung vermieden.

Bevorzugt erstreckt sich der Rotor in Richtung der Leitungsabschnitte der Förderleitung, in welche die Zellenradschleuse eingesetzt ist, und besitzt mit einem Durchmesser von 90 Millimetern einen etwa doppelt so großen Durchmesser wie der Innendurchmesser der Leitungsabschnitte der Förderleitung, welcher gemäß den üblichen Nennweiten bei pneumatischen Fütterungsanlagen 50 mm oder insbesondere 60 mm beträgt. Der Förderluftstrom wird längs durch die Kammern des Rotors geführt.

Die Erfindung wird nachfolgend mit Bezug auf das in den Zeichnungen dargestellte Ausführungsbeispiel näher erläutert. Die Figuren zeigen im Einzelnen:
- Fig. 1: eine schematische seitliche Ansicht einer Fütterungsanlage;
- Fig. 2: einen Querschnitt durch eine Zellenradschleuse gemäß einer ersten Ausführungsform;
- Fig. 3: einen Längsschnitt durch die Zellenradschleuse;
- Fig. 4: einen Ausschnitt einer perspektivischen Ansicht auf einen Rotor;
- Fig. 5: einen Querschnitt durch eine Zellenradschleuse gemäß einer zweiten Ausführungsform;
- Fig. 6: einen Längsschnitt durch die Zellenradschleuse gemäß Fig. 5 und
- Fig. 7: eine perspektivische Ansicht der Zellenradschleuse gemäß Fig.5 und 6.

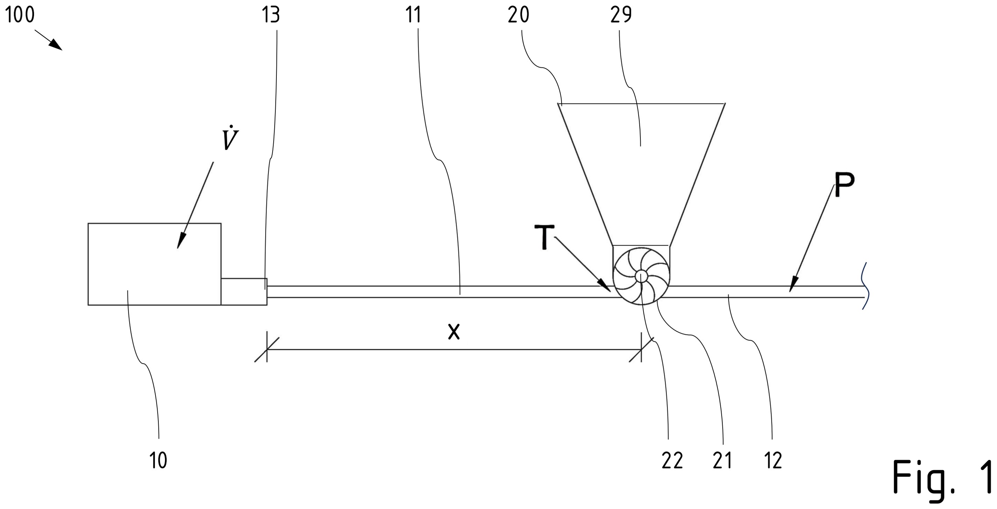

Eine Fütterungsanlage 100 zur Durchführung eines Verfahrens zum Eindosieren von trockenen Futterstoffen in eine pneumatische Förderleitung ist in Figur 1 schematisch dargestellt.

Von einer Drucklufterzeugungseinrichtung 10 führt ein Primärabschnitt 11 der Förderleitung bis zu einer Dosierstation 20. Diese enthält einen Futtervorratsbehälter 29 und eine darunterliegende Zellenradschleuse 21 mit einem Rotor 22. Von der Zellenradschleuse 21 aus geht ein Sekundärabschnitt 12 der Förderleitung ab, in welchem der mit rieselfähigem, trockenem Futterstoff befrachtete Luftstrom zu mehreren Futterstellen geleitet wird.

Im Sekundärabschnitt ist ein Arbeitsdruck p gegeben. Der Abstand x wird gemessen zwischen dem Auslass der Druckerzeugungseinrichtung 10 und dem Einlass in die Zellenradschleuse 21. Von der Drucklufterzeugungseinrichtung 10 wird Förderluft mit einem Volumenstrom V in den Primärabschnitt abgegeben.

In der schematischen Darstellung der Figur 1 ist der Rotor 22 mit seiner Rotationsachse quer zu den Leitungsabschnitten 11, 12 dargestellt. Tatsächlich erstreckt sich der Rotor 22 jedoch in Längsrichtung der Leitungsabschnitte 11,12 und besitzt mit einem Durchmesser von 90 Millimetern einen etwa doppelt so großen Durchmesser wie der Innendurchmesser der Abschnitte 11, 12 der Förderleitung, welcher gemäß den üblichen Nennweiten bei pneumatischen Fütterungsanlagen 50 mm oder insbesondere 60 mm beträgt.

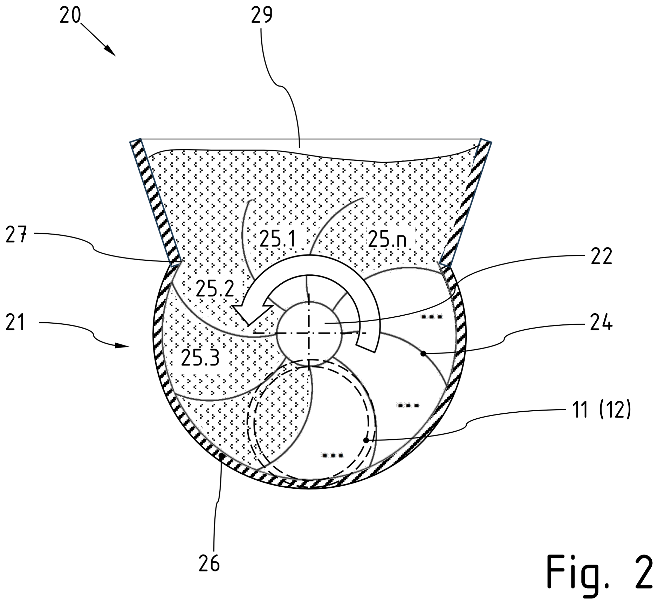

Figur 2 zeigt in einer schematischen Ansicht die Dosierstation 20 mit der Zellenradschleuse 21 von vorn, also aus der Zuströmrichtung des Förderluftstroms durch den Primärabschnitt 11 der Förderleitung gesehen. Die Lage der Primär- und Sekundärabschnitte 11, 12 der Förderleitung ist durch die gestrichelten Kreislinien in Fig. 2 angedeutet. In diesem Beispiel wird also der Förderluftstrom direkt längs durch die Kammern des Rotors 22 geführt.

Der Rotor 22 besteht aus Polyethylen, Polypropylen oder Polyurethan und besitzt in dem dargestellten Beispiel acht Flügel 24 und entsprechend ebenso viele dadurch auf dem Rotor 22 gebildete Kammern 25.1, 25.2 ... 25.n

Die Flügel 24, die die einzelnen Kammern 25.1, 25.2 ... 25.n voneinander trennen, sind entgegen der Rotationsrichtung nach hinten gebogen, um einen schleifenden Kontakt zur Gehäusewandung 26 zu ermöglichen. Im Bereich des Vorratsbehälters 29 können die Flügel 24 etwas expandieren, wenn sie in eine Futterration eintauchen, bevor sie in einem Übergangsbereich 27 wieder in die Anlage an die bogenförmige Gehäusewandung 26 gezwungen werden.

Zwischen den äußeren Kanten der Flügel 24 des Rotors 22 und der Innenwandung besteht ein schleifender Kontakt, der eine weitgehende Luftdichtigkeit ermöglicht. Jedoch müssen der Durchmesser des Rotors und die Größe des Bogenbereichs der Innenwandung wie auch die Anzahl der Kammern und Flügel so abgestimmt sein, dass in keiner Stellung des Rotors 22 der Weg für den Luftstrom von den unteren, in den Querschnitten der Abschnitten 11, 12 der Förderleitung liegenden Kammern 25.1, 25.2 ... 25.n nach oben hin zum Vorratsbehälter 29 geöffnet ist. Vielmehr sind stets wenigstens zwei Flügel 24, zeitweise wenigstens drei Flügel 24, in Kontakt mit der Gehäusewandung 26 und dichten die Zellenradschleuse luftdicht zum Vorratsbehälter 29 hin ab.

Durch eine Sichelform der Flügel 24, die die Kammern 25.1, 25.2 ... 25.n des Rotors 21 voneinander trennen, und durch eine gute Elastizität des Kunststoffs bei der bevorzugten Betriebstemperatur T von 30°C bis 45°C wird außerdem eine Selbstnachstellung der Kanten der Flügel 24 erzielt, d. h., in einem gewissen Verschleißbereich können die Flügel 24 aufgrund der Elastizität nachfedern und den durch den Reibungskontakt zum Gehäuse aufgetretenen Verschleiß an ihren Kanten kompensieren.

Da die Kammern 25.1, 25.2 ... 25.n des Rotors 22 frontal angeströmt werden, während der Rotor 22 rotiert, erfolgt die Abgabe des Futtermittels in den Förderluftstrom nicht stoßweise, sondern kontinuierlich entlang einer wandernden Berührungslinie zwischen den Flügeln 24 des Rotors 22 und der diese umgebenden Gehäusewandung 26.

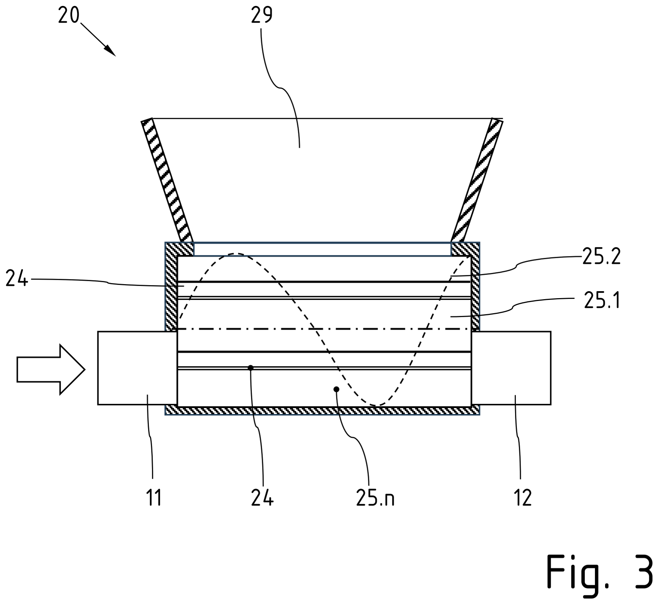

Eine solche Berührungslinie ist durch eine Sinuskurve in Figur 3 angedeutet, welche einen Längsschnitt im Bereich der Zellenradschleuse 21 zeigt.

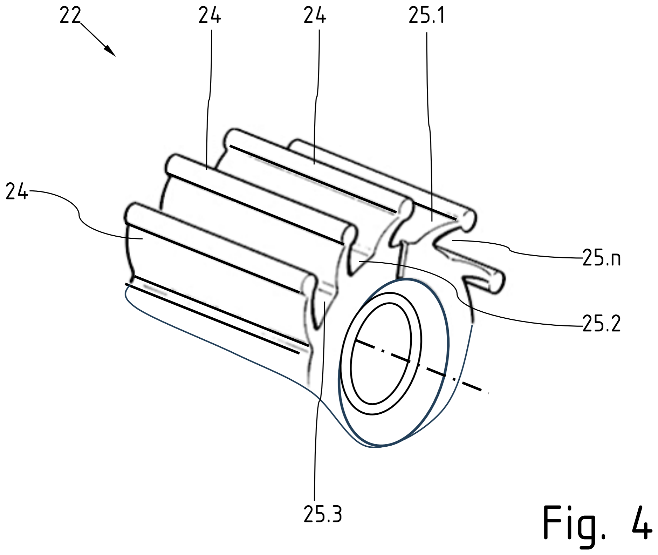

Fig. 4 zeigt einen Ausschnitt einer perspektivischen Ansicht auf eine mögliche Ausführungsform eines impellerartig ausgebildeten Rotors 22 mit flexiblen Flügeln 24, zwischen denen sich die Kammern 25.1, 25.2, ..., 25.n ausbilden. Die Kanten der Flügel 24 können im Querschnitt mit einem Keder verdickt sein, um den gleitend-schleifenden Kontakt zur Gehäusewand zu verbessern und die Verschleißfestigkeit zu erhöhen.

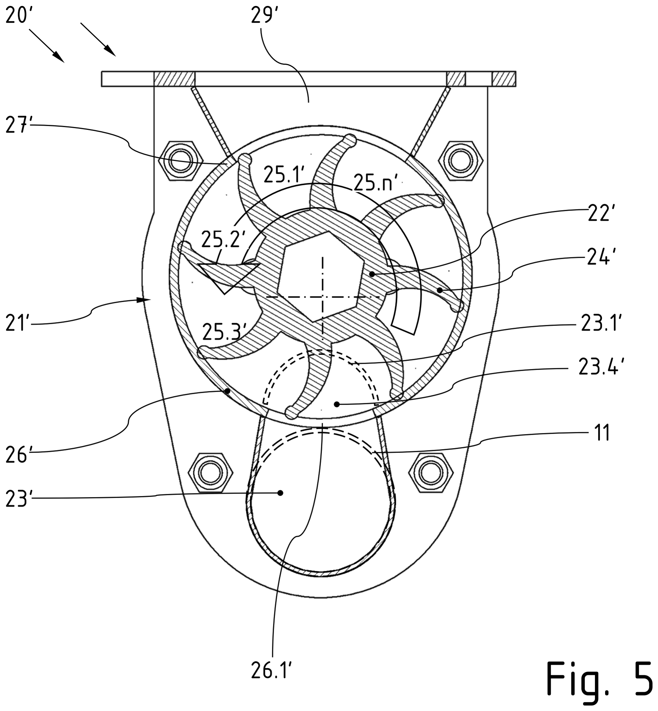

In Fig. 5 ist ein Querschnitt durch Teile einer Dosierstation 20' mit einer Zellenradschleuse 21' gemäß einer zweiten Ausführungsform dargestellt.

Ein Rotor 22' besteht aus Polyethylen, Polypropylen oder Polyurethan und besitzt in dem dargestellten Beispiel acht sichelförmige Flügel 24' und ebenso viele dadurch auf dem Rotor 22' gebildete Kammern 25.1', 25.2' ... 25.n'. Die Flügel 24' sind entgegen der Rotationsrichtung nach hinten gebogen, teilweise durch eine vorgegebene, im Querschnitt sichelförmige Form, teilweise durch die Verformung, die notwendig ist, um den mit Übermaß gefertigten Rotor 22' in das Gehäuse einzusetzen. Diese Verformbarkeit wird durch eine ausreichende Elastizität des Kunststoffs bei der bevorzugten Betriebstemperatur T von 30°C bis 45°C gewährleistet.

Somit besteht ein ständiger schleifender Kontakt der Spitzen der Flügel 24' zu einer Gehäusewandung 26'. Im Bereich des Zulaufs eines Vorratsbehälters 29' können die Flügel 24' etwas expandieren, wenn sie in eine Futterration eintauchen, bevor sie in einem Übergangsbereich 27' wieder in die Anlage an die bogenförmige Gehäusewandung 26' gezwungen werden.

Durch den schleifenden Kontakt wird eine weitgehende Luftdichtigkeit ermöglicht. Jedoch müssen der Durchmesser des Rotors 22' und die Größe des Bogenbereichs der Innenwandung 26' wie auch die Anzahl der Kammern 25.1', 25.2' ... 25.n' und Flügel 24' so aufeinander abgestimmt der Weg für den Luftstrom von den unteren Kammern nach oben hin zum Vorratsbehälter 29 immer versperrt ist. Wenigstens zwei der acht Flügel 24', zeitweise drei Flügel 24', sind in Kontakt mit der Gehäusewandung 26', und zwar auf beiden Abschnitten der Gehäusewandung 26', welche Abschnitte sich jeweils zwischen einer Ausgabeöffnung 26.1' und dem Übergangsbereich 27' erstrecken. Dadurch ist die Zellenradschleuse 21' durch den Rotor 22' luftdicht zum Vorratsbehälter 29' hin abgeschlossen.

Anders als bei der ersten Ausführungsform mündet hier die Primärleitung 11 unterhalb des Rotors der Zellenradschleuse 21' im Gehäuse und führt in ein Ausgabefach 23'. Dahinter schließt sich der vom Gehäuse wegführende Sekundärabschnitt der Förderleitung an. Die Abgabe des Futtermittels erfolgt bei dieser Ausführungsform in den Förderluftstrom, der durch das Ausgabefach 23' hindurch geführt ist.

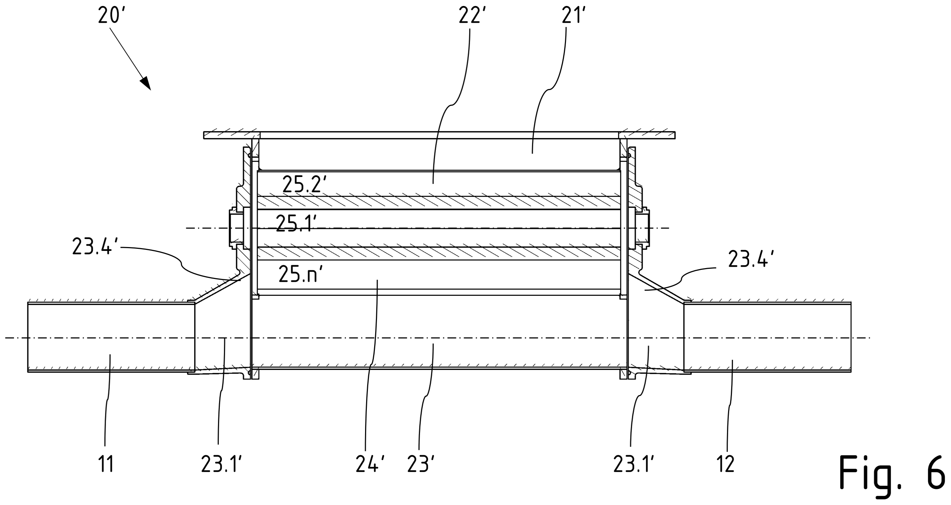

Die Dosierstation 20' mit Zellenradschleuse 21' gemäß der zweiten Ausführungsform ist in Fig. 6 in einem Längsschnitt gezeigt.

Die Primärluftleitung mündet an einem Übergangselement 23.1', durch welches eine Querschnittsvergrößerung des durchströmten Querschnitts innerhalb der Dosierstation 20' erreicht wird. Damit wird nicht nur das Ausgabefach 23' unterhalb des Rotors 22' durchströmt, sondern auch ein Teil der Kammern 25.1', 25.2' ... 25.n'. Dadurch wird einerseits der Hauptanteil des durchströmten Querschnitts, welcher dem Querschnitt der Abschnitte 11, 12 der Förderleitung entspricht, nicht durch Teile des Rotors 22' eingeengt. Andererseits werden durch den durch die Querschnittserweiterung gebildeten, nasenförmigen Teilabschnitts 23.4' des durchströmten Querschnitts die Kammern 25.1', 25.2' ... 25.n' des Rotors 22' ausgeblasen. Eventuell noch an den Flügeln 24' anhaftendes Futter, das nicht direkt in das Ausgabefach 23' gefallen ist, wird dabei gelöst.

Dazu ist, wie im Querschnitt in Fig. 5 ersichtlich, die Form des nasenförmigen Teilabschnitts 23.4' des Übergangselement 23.1' an die Keilform der Kammern 25.1', 25.2' ... 25.n' auf dem Rotor 22' angepasst und reicht bis in die Nähe der Achse des Rotors 22'.

Nach dem Durchströmen der Dosierstation 20' wird der Querschnitt an einem weiteren Übergangselement 23.1'auf den Querschnitt des Sekundärabschnitts 12 reduziert.

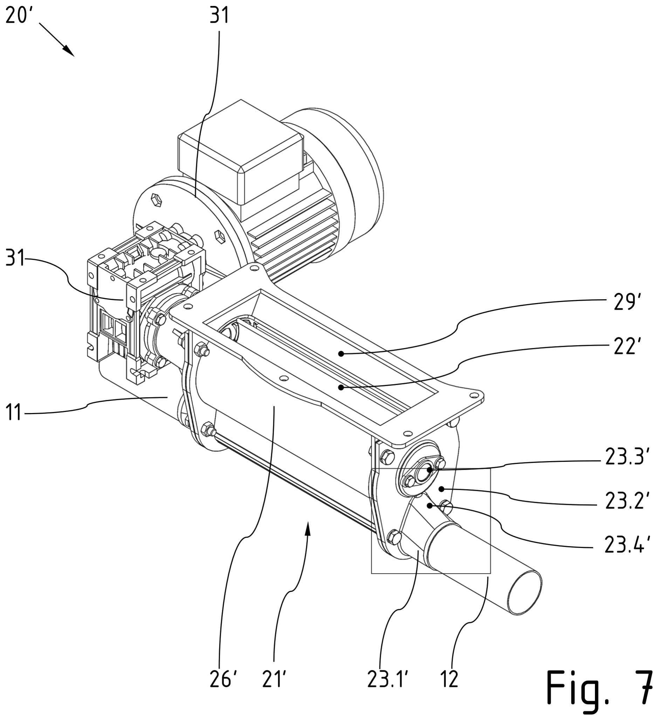

Fig. 7 zeigt eine perspektivische Ansicht der Dosierstation 20'. Ein Motor 30 ist mit einem Getriebe 32 verbunden, welches wiederum mit der Gehäusewandung 26' der Zellenradschleuse 21' verbunden ist und den Rotor 22' antreibt. Ein Futtervorratsbehälter ist in dieser Darstellung abgenommen. Sichtbar sind dadurch ein Dosiertrichter 29' und der Rotor 22' im Inneren der Zellenradschleuse 21'. Eine Stirnseite ist als abnehmbarer Gehäuseflansch 23.2' ausgebildet, der ein Lager 23.3' für den Rotor 22' aufnimmt und der darunter das Übergangselement 23.1' enthält, an welches sich der Sekundärabschnitt 12 der Förderleitung anschließt.

## Patentansprüche

1. Verfahren zum Eindosieren von trockenen Futterstoffen in eine pneumatische Förderleitung, mit wenigstens folgenden Schritten
a) Erzeugen eines Luftstroms V in der Förderleitung mit einem Arbeitsdruck p mittels einer Drucklufterzeugungseinrichtung (10);
b) Eindosieren von rieselfähigen Futterstoffen an einer Dosierstation (20; 20'), die eine Zellenradschleuse (21; 21') umfasst, wobei sich ein Primärabschnitt (11) der Förderleitung zwischen der Drucklufterzeugungseinrichtung (10) und der Zellenradschleuse (21; 21') erstreckt und wobei die Futterstoffe über die Zellenradschleuse (21; 21') in den Luftstrom V in der Förderleitung abgegeben werden;
c) Austragen des Futter-Luft-Gemisches über einen sich jenseits der Dosierstation (20; 20') erstreckenden Sekundärabschnitt (12) der Förderleitung zu wenigstens einer Ausgabestelle;
**dadurch gekennzeichnet,**
- **dass** eine Zellenradschleuse (21; 21') verwendet wird, die einen Rotor (22; 22') mit Flügeln (24; 24') besitzt, wobei zumindest die Flügel (24; 24') aus einem Polyurethan oder aus einem thermoplastischen Kunststoff bestehen und wobei der Durchmesser des Rotors (22; 22') gegenüber einem Innendurchmesser einer umgebenden Gehäusewandung (26; 26') ein Übermaß besitzt; und
- **dass** die Kompression und der Volumenstrom der Förderluft in der Drucklufterzeugungseinrichtung (10) so eingestellt werden, dass die Temperatur der Förderluft auf ein solches Maß erhöht wird, dass durch die in die Zellenradschleuse (21; 21') eintretende Förderluft den Rotor (22; 22') derart erwärmt, dass die Flügel (24; 24') des Rotors (22; 22') derart erweicht werden, dass sie in einem Maße elastisch sind, dass sie entgegen der Rotationsrichtung nach hinten gebogen werden und einen schleifenden, eine Luftdichtheit herbeiführenden Kontakt zur Innenwandung des Gehäuses (26; 26') halten.

2. Verfahren nach Anspruch 1, **dadurch gekennzeichnet, dass** ein Seitenkanalverdichter als Drucklufterzeugungseinrichtung verwendet wird und dass die Leistung der Drucklufterzeugungseinrichtung (10) so gewählt ist, dass unmittelbar hinter dem Luftaustritt am Seitenkanalverdichter eine Temperatur von mindestens 50°, insbesondere 55°C vorliegt.

3. Verfahren nach Anspruch 1 oder 2, **dadurch gekennzeichnet, dass** die Leistung der Drucklufterzeugungseinrichtung (10) und der Volumenstrom des davon abgegebenen Luftstroms V so gewählt werden, dass der in die Zellenradschleuse (21; 21') eintretende Luftstrom V eine Temperatur von 20°C bis 50° besitzt und der Rotor (22; 22') mit einer Betriebstemperatur von 30°C bis 45° betrieben wird.

4. Verfahren nach einem der Ansprüche 1 bis 3, **dadurch gekennzeichnet, dass** der Arbeitsdruck in der Förderleitung 0,15 bar bis 0,7 bar beträgt.

5. Verfahren nach einem der Ansprüche 1 bis 4, **dadurch gekennzeichnet, dass** ein Rotor (22; 22') verwendet wird, der aus Polypropylen, Polyethylen oder Polyurethan, jeweils ohne Verstärkungsfasern besteht.

6. Verfahren nach einem der Ansprüche 1 bis 5, **dadurch gekennzeichnet, dass** ein Rotor (22; 22') verwendet wird, dessen Flügel (24; 24') entgegen der vorgesehenen Rotationsrichtung vorgekrümmt sind.

7. Verfahren nach einem der Ansprüche 3 bis 6, **dadurch gekennzeichnet, dass** vor dem erstmaligen Eindosieren von rieselfähigen Futterstoffen an der Dosierstation die Zellenradschleuse (21; 21') mit erwärmter Förderluft durchströmt wird, bevor der Rotor (22; 22') in Rotation versetzt wird, bis der Rotor (22; 22') auf die vorgesehene Betriebstemperatur erwärmt ist.

8. Fütterungsanlage (100) zur Durchführung eines Verfahrens zum Eindosieren von trockenen Futterstoffen in eine pneumatische Förderleitung nach wenigstens einem der vorhergehenden Ansprüche, wenigstens umfassend:
- eine Drucklufterzeugungseinrichtung (10) zur Erzeugung eines Förderluftstroms;
- eine Dosierstation (20; 20') mit einem Futtervorratsbehälter mit einem Dosiertrichter (29; 29') und einer darunter angeordneten Zellenradschleuse (21; 21') mit einem in Längsrichtung des Förderluftstroms ausgerichteten Rotor (22; 22') mit mehreren Flügeln (24; 24');
- einen Primärabschnitt (11) einer Förderleitung, der mit der Zellenradschleuse (21; 21') der Dosierstation (20; 20') verbunden ist,
- einen von der Dosierstation (20; 20') abgehenden Sekundärabschnitt (12) der Förderleitung, in welchem der mit rieselfähigem, trockenem Futterstoff befrachtete Luftstrom zu wenigstens einer Ausgabestelle geleitet wird;
**dadurch gekennzeichnet, dass**
- der Rotor (22; 22') nach Art eines Impellers mit elastischen, sich entgegen der Rotationsrichtung des Rotor (22; 22') nach hinten biegenden Flügeln (24; 24') ausgebildet ist,
- dass der Rotor (22; 22') oder zumindest die Flügel (24; 24') des Rotors (22; 22') aus einem Polyurethan oder aus einem thermoplastischen Kunststoff bestehen;
- dass der Durchmesser des Rotors (22; 22') gegenüber einem Innendurchmesser einer umgebenden Gehäusewandung (26; 26') ein Übermaß besitzt, wobei ein schleifender, eine Luftdichtheit herbeiführender Kontakt der Kanten der elastischen Flügel (24; 24') zur Innenwandung des Gehäuses (26; 26') besteht und
- der Werkstoff des Rotors (22; 22') hinsichtlich seiner We mit einer Betriebstemperatur von 30°C bis 45° betrieben wird.

9. Fütterungsanlage (100) nach Anspruch 8, **dadurch gekennzeichnet, dass** der Rotor (22; 22') aus Polypropylen oder Polyethylen ohne Verstärkungsfasern besteht.

10. Fütterungsanlage (100) nach Anspruch 8 oder 9, **dadurch gekennzeichnet, dass** der Rotor (22; 22') mindestens 6, höchstens 12 Flügel (24; 24') und entsprechend ebenso viele dadurch gebildete Kammern (25.1, 25.2 ... 25.n; 25.1', 25.2' ... 25.n') aufweist.

11. Fütterungsanlage (100) nach einem der Ansprüche 8 bis 10, **dadurch gekennzeichnet,**
- **dass** in der Zellenradschleuse (21; 21') beidseits im Querschnitt zwischen einem Übergangsbereich zu einem Dosiertrichter (29; 29') und den Abschnitten (11, 12) der Förderleitung bzw. eines Ausgabefachs (23') zwei Abschnitte der Gehäusewandung (26; 26') bestehen, die im Querschnitt kreisbogenförmig sind und
- **dass** in den beiden Abschnitten der Gehäusewandung (26; 26') bei jeder Winkelstellung des Rotors (22; 22') wenigstens zwei Flügel (24; 24') mit ihren Kanten anliegen.

12. Fütterungsanlage (100) nach Anspruch11, **dadurch gekennzeichnet, dass** der Werkstoff und die Geometrie des Rotors derart aufeinander abgestimmt sind, dass bei einer Betriebstemperatur von 30° bis 45°C die Biegesteifigkeit der Flügel um mindestens 10% gegenüber der Biegesteifigkeit bei Raumtemperatur reduziert ist, und dass zugleich bei der genannten Betriebstemperatur die Kanten der erweichten, unverschlissenen Flügel (24; 24') in Anlage mit der Innenwandung im Gehäuse sind.

13. Fütterungsanlage (100) nach einem der Ansprüche 8 bis 12, **dadurch gekennzeichnet, dass** bei dem Rotor (22; 22') das Verhältnis von Länge zu Durchmesser 1,0 bis 4,0 beträgt.

14. Fütterungsanlage (100') nach einem der Ansprüche 8 bis 13, **dadurch gekennzeichnet, dass** bei der Dosierstation (20') unterhalb des Rotors (22') der Zellenradschleuse (21') ein Luft durchströmtes Ausgabefach (23') vorgesehen ist, welches in Flucht mit den Abschnitten (11, 12) der Förderleitung liegt.

15. Fütterungsanlage (100') nach Anspruch 14, **dadurch gekennzeichnet, dass** zwischen den Ein- und/oder Auslassöffnungen der Dosierstation (20') ein Übergangselement (23.1') vorgesehen ist, welches von dem runden Strömungsquerschnitt der sich dort anzuschließenden Abschnitte (11, 12) der Förderleitung ausgehend nach oben durch einen nasenförmigen Teilabschnitts (23.4') erweitert ist, wobei der nasenförmige Teilabschnitts (23.4') bis in den Querschnitt der Kammern (25.1', 25.2' ... 25.n') des Rotors (22') reicht.
